# EUROPEAN PATENT SPECIFICATION

(11) **EP 3 136 056 B1**
(45) Date of publication and mention of the grant of the patent: **08.05.2019**
(21) Application number: 16185084.7
(22) Date of filing: 22.08.2016
(51) Int. Cl.: G01D 5/14, F16H 59/10, G01D 5/244

(54) **POSITION SENSOR**
POSITIONSSENSOR
CAPTEUR DE POSITION

(30) Priority: 25.08.2015 JP 2015166026
(43) Date of publication of application: 01.03.2017
(73) Proprietor: KABUSHIKI KAISHA TOKAI RIKA DENKI SEISAKUSHO, Niwa-gun, Aichi 480-0195 (JP)
(72) Inventor: IWATA, Masayoshi, Niwa-gun, Aichi 480-0195 (JP)
(74) Representative: TBK

(56) References cited:
- JP-A- 2007 223 384
- JP-A- 2011 105 168
- US-A1- 2004 035 237
- US-A1- 2010 090 689

## Description

The present invention relates to a position sensor.

A position sensor that detects the position of a shift lever is known in the art.

JP 2014-20922 A describes a position sensor for a shift lever. The position sensor includes a single magnet and a number of magnetic detection elements. The shift lever moves along a straight line, and the magnet also moves along a straight line in cooperation with the shift lever. The magnetic detection elements are laid out in a pattern to detect the magnet. The layout of the magnetic detection elements allows for accurate detection of the position of the magnet, that is, the position of the shift lever even when one of the magnetic detection elements becomes defective.

In an electric vehicle or a hybrid vehicle, the shift lever is moved in a number of directions. More specifically, the shift lever is moved in a pattern having the shape of uppercase T or lowercase h. Thus, it is difficult to apply the technique of JP 2014-20922 A to such a shift lever.

JP 2007-223384 A discloses, for providing a shift lever unit capable of highly maintaining operational reliability for a long period of time, a shift lever unit which has a guide rod to be displaced interlocked with a shift lever, a hard gate plate constituted to regulate the motion of the shift lever by supporting the shift lever by passing the guide rod through a through slit type shift gate and at least more than two detection sensors to detect a shift position. Each of the detection sensors is constituted to detect the shift position by detecting a displaced position of the end of the guide rod in a state of being held by the hard gate plate.

JP 2011-105168 A discloses a lever position detecting device which diagnoses a failure of a select lever device having a T-shaped or H-shaped operation passage of a select lever, has two magnets moved following a base end of the select lever and six sensors outputting a detection signal upon sensing the magnetic force, being provided on the lever position detecting device, and respective range positions of the select lever are detected by sensing the first and second magnets by at least the two sensors of the six sensors.

It is an object of the present invention to provide a position sensor that detects the position of a single detection subject, which moves in a number of directions, in a fail-safe manner.

One aspect of the present invention is a position sensor that detects a position of an operation member moved along an operation path extending in three different directions from a specific position. The position sensor includes a single detection subject and detection elements. The detection subject moves in cooperation with the operation member between the branching position and a first position, a second position, and a third position that are located in three directions from a branching position corresponding to the specific position. The detection elements are capable of detecting the detection subject. Each of the detection elements generates an output indicating detection of the detection subject. The detection elements are laid out so that movement of the detection subject from the branching position to any one of the first to third positions changes the outputs of at least two of the detection elements from a state indicating detection of the detection subject to a state indicating non-detection of the detection subject, changes the output of at least another one of the detection elements from a state indicating non-detection of the detection subject to a state indicating detection of the detection subject, and keeps the output of a further one of the detection elements unchanged. The detection elements are also laid out so that movement of the detection subject from the branching position to any one of the first to third positions changes the outputs of at least three of the detection elements. The at least three of the detection elements of which the outputs change are in a combination that differs for each of the first to third positions.

In this structure, when the detection elements are all functioning normally, movement of the detection subject between the branching position and any one of the other positions changes the outputs of at least three detection elements. The at least three of the detection elements of which the outputs change are in a combination that differs for each of the first to third positions. This allows for accurate determination of the position where the detection subject is located. In this manner, the position sensor detects the position of the detection subject, which moves in three different directions from the branching position, in a fail-safe manner.

The position sensor according to the present invention is fail-safe when detecting the position of a single detection subject that moves in a number of directions.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a perspective view showing a shift device;
Fig. 2 is a schematic block diagram showing the configuration of the shift device;
Fig. 3A is a plan view showing the positional relationship of a magnet and Hall ICs when the shift lever is located at an H position;
Fig. 3B is a plan view showing the positional relationship of the magnet and the Hall ICs when the shift lever is located at an R position;
Fig. 3C is a plan view showing the positional relationship of the magnet and the Hall ICs when the shift lever is located at an N position;
Fig. 3D is a plan view showing the positional relationship of the magnet and the Hall ICs when the shift lever is located at a D position;
Fig. 4A is a chart showing the relationship of the shift lever position and on signals output from the Hall ICs when each Hall IC is functioning normally;
Fig. 4B is a chart showing on signals output from the Hall ICs when the shift lever is located at the R position and one of the Hall ICs is defective;
Fig. 4C is a chart showing on signals output from the Hall ICs when the shift lever is located at the N position and one of the Hall ICs is defective;
Fig. 4D is a chart showing on signals output from the Hall ICs when the shift lever is located at the D position and one of the Hall ICs is defective;
Fig. 4E is a chart showing on signals output from the Hall ICs when the shift lever is located at the H position and one of the Hall ICs is defective;
Fig. 5 is a plan view showing the positional relationship of the magnet and the Hall ICs in another example; and
Fig. 6 is a plan view showing a shift pattern in a further example.

One embodiment of a shift device including a position sensor will now be described with reference to the drawings.

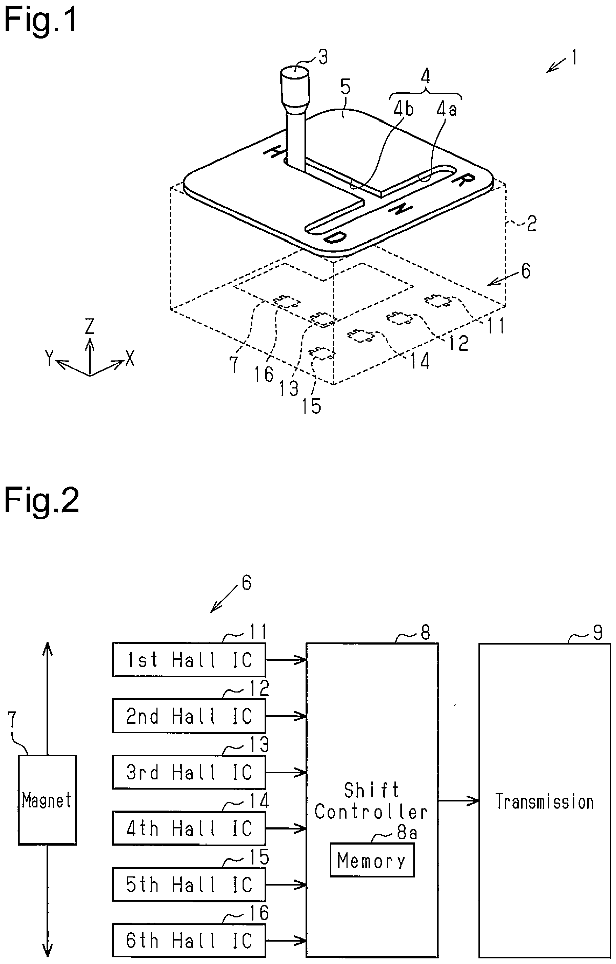

As shown in Fig. 1, a shift device 1 includes a case 2 fixed to a vehicle, a shift lever 3 supported by the case 2 in a movable manner, a shift panel 5 including a shift pattern 4 that guides movement of the shift lever 3, and a position sensor 6 that detects the position of the shift lever 3.

The shift pattern 4 is T-shaped in its entirety and includes a shift path 4a and a selection path 4b. The selection path 4b extends perpendicular to the shift path 4a and intersects the middle of the shift path 4a. The direction in which the shift path 4a extends is referred to as the X-direction, and the direction in which the selection path 4b extends is referred to as the Y-direction.

The shift path 4a includes one end set as a reverse (R) position, a middle location set as a neutral (N) position (specific position), and another end set as a drive (D) position.

The selection path 4b includes an end set as a home (H) position and an opposite end that is continuous with the middle location of the shift path 4a, or the N position.

The shift lever 3 is movable between the H and N positions, the N and R positions, and the N and D positions. After the user moves the shift lever 3 to the R position, N position, or the D position, the shift lever 3 automatically returns to the H position when released by the user. Each position is spaced apart from the adjacent position by an equal distance. The shift lever 3 serves as an operation member. The shift pattern 4 corresponds to an operation path.

The position sensor 6 includes a magnet 7 and six Hall ICs 11, 12, 13, 14, 15, and 16.

A magnet 7 is fixed to the end (proximal end) of the shift lever 3 that is located in the case 2. The magnet 7 moves in the X-direction and the Y-direction in cooperation with the movement of the shift lever 3. The magnet 7 serves as a detection subject.

Each of the six Hall ICs 11 to 16 is a digital Hall IC configured to switch the output signal between on and off in accordance with the magnetic flux density. The digital Hall IC, for example, detects the magnetic flux density acting on the digital Hall IC, compares the detected magnetic flux density with a predetermined threshold value, and generates a detection signal in accordance with the comparison result. When the detected magnetic flux density is greater than or equal to the threshold value, the digital IC outputs an on signal as the detection signal. When the detected magnetic flux density is less than the threshold value, the digital Hall IC outputs an off signal as the detection signal. That is, the digital Hall IC outputs an on signal when the magnet 7 is detected and outputs an off signal when the magnet 7 is not detected. The output on signal has a first voltage, and the output off signal has a second voltage. For example, the first voltage is set at an H level, and the second voltage is set at an L level. However, the first voltage and the second voltage are not particularly limited as long as the output on signal and the output off signal can be recognized. A substrate is arranged on the bottom of the case 2, and the Hall ICs 11 to 16 are mounted on the substrate. The Hall ICs are arranged at locations where they can be opposed to the magnet 7.

Referring to Fig. 2, the six Hall ICs 11 to 16 are electrically connected to a shift controller 8.

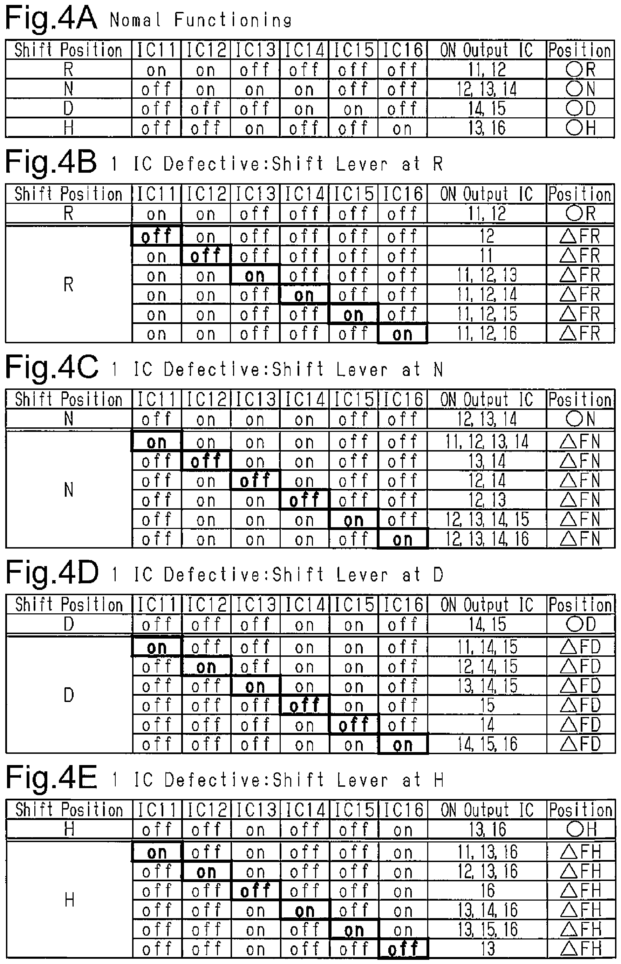

The shift controller 8 includes a memory 8a. The memory 8a stores the information illustrated in Figs. 4A to 4E showing the ON signals output from the Hall ICs 11 to 16 in correspondence with the position of the shift lever 3 and failures of the Hall ICs 11 to 16.

The shift controller 8 compares the information stored in the memory 8a with the signals output from the six Hall ICs 11 to 16 to determine the position of the shift lever 3 and switch the gear mode of a transmission 9 accordingly. When the shift controller 8 determines that one of the six Hall ICs 11 to 16 is defective, the shift controller 8 uses a warning unit (not shown), which is arranged in the vehicle, to issue a warning indicating that a Hall IC is defective.

The position sensor 6 will now be described in detail.

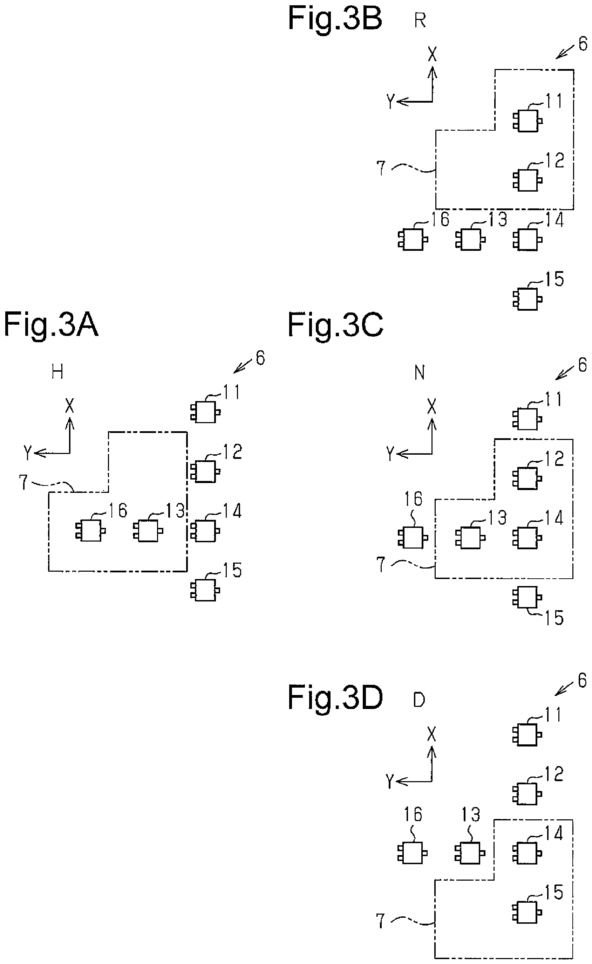

As shown in Figs. 3A to 3D, the six Hall ICs 11 to 16 are arranged in correspondence with the T-shaped shift pattern 4 (refer to Fig. 1).

The first Hall IC 11, the second Hall IC 12, the fourth Hall IC 14, and the fifth Hall IC 15 are sequentially arranged along a straight line in the X-direction that corresponds to the direction extending from the R position via the N position toward the D position. The fourth Hall IC 14, the third Hall IC 13, and the sixth Hall IC 16 are sequentially arranged along a straight line in the Y-direction that corresponds to the direction extending from the N position toward the H position. The six Hall ICs 11 to 16 are arranged at equal intervals and all react to the approach of the same polarity (e.g., S pole).

The N position corresponds to a branching position, the R position corresponds to a first position, the D position corresponds to a second position, and the H position corresponds to a third position. The Hall IC 11 corresponds to a first detection element, the Hall IC 15 corresponds to a second detection element, the Hall IC 16 corresponds to a third detection element, the Hall IC 14 corresponds to a fourth detection element, the Hall IC 13 corresponds to a fifth detection element, and the Hall IC 12 corresponds to a sixth detection element.

The magnet 7 is L-shaped in a plan view taken in the Z-direction and formed by, for example, combining a plate that extends in the X direction and a plate that extends in the Y direction. Further, the magnet 7 includes a plate surface having a certain polarity, in this case, the S polarity. The plate surface magnetized as the S pole is arranged to oppose the six Hall ICs 11 to 16. The magnet 7 includes a side extending in the X-direction and a side extending in the Y-direction. The side extending in the X-direction has a length that allows the magnet 7 to be opposed to two adjacent ones of the six Hall ICs 11 to 16 in the X direction. The side extending in the Y-direction has a length that allows the magnet 7 to be opposed to two adjacent ones of the six Hall ICs 11 to 16 in the Y direction.

The shape of magnet 7 and the positions of the six Hall ICs 11 to 16 results in the movement of the shift lever 3 to each position obtaining the positional relationship of the magnet 7 and the six Hall ICs 11 to 16 described below.

As shown in Fig. 3A, when the shift lever 3 is located at the H position, the magnet 7 is opposed to the third Hall IC 13 and the sixth Hall IC 16 but not opposed to the first Hall IC 11, the second Hall IC 12, the fourth Hall IC 14, and the fifth Hall IC 15.

As shown in Fig. 3B, when the shift lever 3 is located at the R position, the magnet 7 is opposed to the first Hall IC 11 and the second Hall IC 12 but not opposed to the third Hall IC 13, the fourth Hall IC 14, the fifth Hall IC 15, and the sixth Hall IC 16.

As shown in Fig. 3C, when the shift lever 3 is located at the N position, the magnet 7 is opposed to the second Hall IC 12, the third Hall IC 13, and the fourth Hall IC 14 but not opposed to the first Hall IC 11, the fifth Hall IC 15, and the sixth Hall IC 16.

As shown in Fig. 3D, when the shift lever 3 is located at the D position, the magnet 7 is opposed to the fourth Hall IC 14 and the fifth Hall IC 15 but not opposed to the first Hall IC 11, the second Hall IC 12, the third Hall IC 13, and the sixth Hall IC 16.

The operation of the position sensor 6 will now be described.

As shown in Figs. 3A to 3D, the magnet 7, which moves in cooperation with the shift lever 3, is movable from the position corresponding to the N position to positions corresponding to the R position, the D position, and the H position.

When the shift lever 3 moves from the N position to the R position, the magnet 7 shifts from a state opposed to three Hall ICs, namely, the second Hall IC 12, the third Hall IC 13, and the fourth Hall IC 14 to a state opposed to two Hall ICs, namely, the first Hall IC 11 and the second Hall IC 12.

When the shift lever 3 moves from the N position to the D position, the magnet 7 shifts from a state opposed to three Hall ICs, namely, the second Hall IC 12, the third Hall IC 13, and the fourth Hall IC 14 to a state opposed to two Hall ICs, namely, the fourth Hall IC 14 and the fifth Hall IC 15.

When the shift lever 3 moves from the N position to the H position, the magnet 7 shifts from a state opposed to three Hall ICs, namely, the second Hall IC 12, the third Hall IC 13, and the fourth Hall IC 14 to a state opposed to two Hall ICs, namely, the third Hall IC 13 and the sixth Hall IC 16.

When the shift lever 3 is set at the N position, the magnet 7 is opposed to three Hall ICs. When the shift lever 3 is shifted from the N position in any one of three directions, the magnet 7 continues to oppose one of the Hall ICs and moves away from the two other Hall ICs. In this case, one of the Hall ICs that the magnet 7 will be opposed to at the shifted position is a Hall IC that the magnet 7 was not opposed to at the N position.

The shape of the magnet 7 and the layout of the six Hall ICs 11 to 16 results in the outputs of the six Hall ICs 11 to 16 and the position of the shift lever 3 having the relationship shown in Fig. 4A when none of the six Hall ICs 11 to 16 is defective. As shown in Fig. 4A, when the six Hall ICs 11 to 16 are all functioning normally, at least two of the Hall ICs output on signals regardless of the position of the shift lever 3.

This allows the shift controller 8 to accurately determine the position of the shift lever 3. Further, the shift controller 8 can determine that the six Hall ICs 11 to 16 are functioning normally.

Figs. 4B to 4E show the relationship of the outputs of the six Hall ICs 11 to 16 and the position of the shift lever 3 when one of the six Hall ICs 11 to 16 is defective. In Figs. 4B to 4E, the boxes in thick lines indicate the outputs of defective Hall ICs. As shown in Figs. 4B to 4E, when one of the six Hall ICs 11 to 16 is defective, the Hall ICs 11 to 16 do not all generate the same output. That is, at least one of the Hall ICs 11 to 16 generates an output that differs from the outputs of the other Hall ICs 11 to 16. This is because the magnet 7 is opposed to two or more Hall ICs 11 to 16 regardless of the position of the shift lever 3.

As apparent when comparing Figs. 4A to 4E with one another, the combination of the Hall ICs 11 to 16 outputting ON signals differs in accordance with the position of the shift lever 3 regardless of whether the Hall ICs II to 16 are all functioning normally or one of the Hall ICs 11 to 16 is defective. This allows the shift controller 8 to specify the position of the shift lever 3 from the combination of the Hall ICs 11 to 16 that generate ON signals. For example, when only the second Hall IC 12 is generating an output signal, the shift controller 8 determines that the shift lever 3 is located at the R position and that the first Hall IC 11 outputting an off signal is defective.

Thus, the shift controller 8 accurately determines the position of the shift controller 8 even when the combination of the Hall ICs 11 to 16 that output on signals is as shown below the double line in each of Figs. 4B to 4E. Further, the shift controller 8 is able to determine which one of the six Hall ICs 11 to 16 is defective. In Fig. 4B, the determination column includes FR, which indicates a fail-safe R position. In the same manner, the determination columns in Figs. 4C to 4E include FN, FD, and FH that indicate a fail-safe N position, a fail-safe D position, and a fail-safe H position.

The present embodiment has the advantages described below.
(1) The shift lever 3 is moved between the N position and any one of the R position, the D position, and the H position, which are located in three different directions from the N position. The magnet 7 is coupled to the shift lever 3, and the signals output from the six Hall ICs 11 to 16 change when opposed to the magnet 7. The layout of six Hall ICs 11 to 16 is as described below.

The second Hall IC 12, the third Hall IC 13, and the fourth Hall IC 14 are laid out to oppose the magnet 7 when the magnet 7 is located at the N position. The first Hall IC 11, the third Hall IC 13, and the fourth Hall IC 14 are laid out to output signals that change when the magnet 7 moves between the N position and the R position. The second Hall IC 12, the third Hall IC 13, and the fifth Hall IC 15 are laid out to output signals that change when the magnet 7 moves between the N position and the D position. The second Hall IC 12, the fourth Hall IC 14, and the sixth Hall IC 16 are laid out to output signals that change when the magnet 7 moves between the N position and the H position.

As shown in Figs. 4A to 4E, for each situation in which the six Hall ICs 11 to 16 are all functioning normally and in which one of the Hall ICs 11 to 16 is defective, there is only one combination of on signals output from the Hall ICs 11 to 16.

Thus, the shift controller 8 is able to accurately detect the position of the magnet 7 and, consequently, the position of the shift lever 3 from the signals output from the six Hall ICs 11 to 16, which is less in number than the prior art. Further, when one of the Hall ICs 11 to 16 is defective, the defective Hall IC can be located.

(2) The second Hall IC 12 is closer to the first IC 11 than the fourth Hall IC 14 and the third Hall IC 13. The fourth Hall IC 14 is closer to the fifth IC 15 than the third Hall IC 13 and the second Hall IC 12. The third Hall IC 13 is closer to the sixth IC 16 than the fourth Hall IC 14 and the second Hall IC 12. Thus, when the magnet 7 moves between the N position and one of the R position, the D position, and the H position, the Hall IC that continues to output the same signal is located between a Hall IC of which the output changed from an on signal to an off signal and a Hall IC of which the output changed from an off signal to an on signal. That is, the Hall IC that remains opposed to the magnet 7 is located between a Hall IC that is no longer opposed to the magnet 7 and a Hall IC that becomes opposed to the magnet 7. Thus, the magnet 7 may be further reduced in size. This, in turn, allows the shift device 1 to be reduced in size.

It should be apparent to those skilled in the art that the present invention may be embodied in many other specific forms without departing from the spirit or scope of the invention. Particularly, it should be understood that the present invention may be embodied in the following forms.

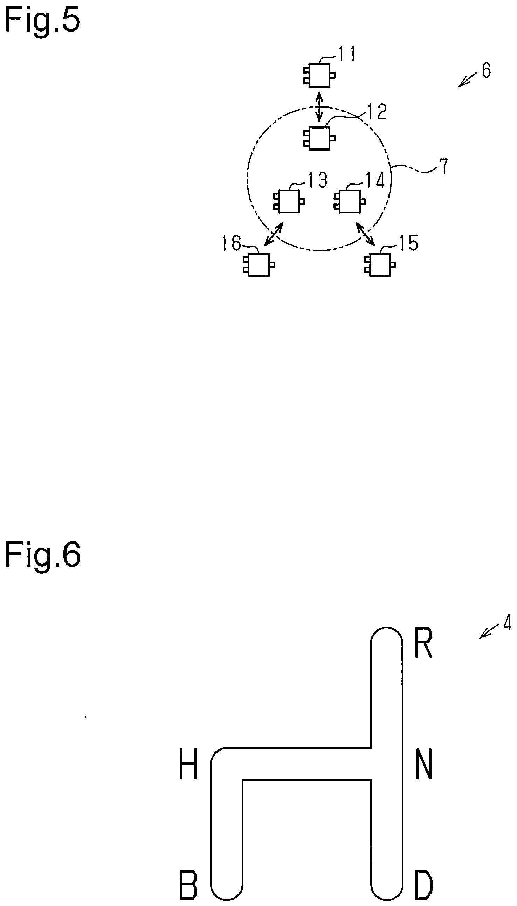

In the above embodiment, the Hall ICs 11 to 16 are laid out in a T-shaped pattern, and the magnet 7 is L-shaped. Instead, for example, as shown in Fig. 5, the Hall ICs 11 to 16 may be laid out at positions located in three directions from the branching position. Further, the magnet 7 may have a round shape as shown in Fig. 5 or any other shape. Such structures have the same advantages as the above embodiment.

In the above embodiment, the magnet 7 is located on the proximal end of the shift lever 3 but only needs to move in cooperation with the shift lever 3.

In the above embodiment, the position sensor 6 is applied to the shift device 1 that includes the shift lever 3, which is moved along a T-shaped pattern. However, the position sensor 6 is also applicable to a shift device including a shift lever that is moved along a pattern having the form of lowercase h as shown in Fig. 6.

In the above embodiment, the Hall ICs 11 to 16 are S pole detection Hall ICs and react to the approach of the S pole but may be N pole detection Hall ICs that react to the approach of the N pole. In this case, the plate surface of the magnet 7 opposed to the Hall ICs 11 to 16 is magnetized to the N pole. Such a structure obtains the same advantages as the above embodiment.

In the above embodiments, each of the Hall ICs is a digital Hall IC that outputs an on signal or an off signal but may be an analog Hall IC that outputs a signal in accordance with the magnetic flux density.

In the above embodiment, any magnetic detection element may be used and there is no limit to Hall ICs.

In the above embodiment, the substrate on which the Hall ICs 11 to 16 are mounted is located on the bottom of the case 2. Instead, the substrate may be located on a side surface in the case 2. If the substrate is located on the bottom of the case 2, the substrate may be inclined relative to the bottom surface. In such a case, a link mechanism may be arranged between the shift lever and the magnet so that the Hall ICs on the substrate can be opposed to the magnet. This obtains the same advantages.

In the above embodiment, the locations of the R position, the N position, the D position, and the H position are examples and may be changed.

In the above embodiment, the shift device 1 is a momentary switch that returns the shift lever 3 to the H position when the shift lever 3 is released. Instead, the shift device 1 may be a stationary switch that keeps the shift lever 3 at the position it is moved to when the shift lever 3 is released.

The above embodiment is applicable to an optical position sensor that replaces the magnet 7 with a light source and replaces the Hall ICs with optical sensors.

In the above embodiment, the position sensor 6 is applied to the shift device 1 that switches the gear mode of the transmission 9. However, the position sensor is applicable to any device and does not have to be installed in a vehicle as long as the device produces movement in three different directions from a branching position.

A position sensor detects the position of a shift lever (3) that is moved along a shift pattern (4) extending in three different directions from a neutral position. The position sensor includes a magnet (7) that moves together with the shift lever (3) when the shift lever (3) is moved between the neutral position and any one of a reverse position, a drive position, and a home position, which are located in three directions from the neutral position. The position sensor also includes Hall IC elements (11-16) that detect the magnet (7) and generate outputs indicating detection of the magnet (7). The Hall IC elements (11-16) are laid out so that the position of the shift lever (3) can be determined from the outputs of the Hall IC elements (11-16).

## Claims

1. A position sensor adapted to detect a position of an operation member (3) moved along an operation path (4) extending in three different directions from a specific position, the position sensor comprising:
a single detection subject (7) adapted to move in cooperation with the operation member (3) between the branching position and a first position, a second position, and a third position that are located in three directions from a branching position corresponding to the specific position; and
detection elements (11-16) that are capable of detecting the detection subject (7), wherein
each of the detection elements (11-16) is adapted to generate an output indicating detection of the detection subject (7),
the detection elements (11-16) are laid out so that movement of the detection subject (7) from the branching position to any one of the first to third positions changes the outputs of at least two of the detection elements (11-16) from a state indicating detection of the detection subject (7) to a state indicating non-detection of the detection subject (7), changes the output of at least another one of the detection elements (11-16) from a state indicating non-detection of the detection subject (7) to a state indicating detection of the detection subject (7), and keeps the output of a further one of the detection elements (11-16) unchanged,
the detection elements (11-16) are also laid out so that movement of the detection subject (7) from the branching position to any one of the first to third positions changes the outputs of at least three of the detection elements (11-16),
the at least three of the detection elements (11-16) of which the outputs change are in a combination that differs for each of the first to third positions,
the single detection subject is a single magnet,
the single magnet includes a plate surface that is arranged to oppose the detection elements, and
the plate surface of the single magnet has a single polarity.

2. The position sensor according to claim 1, wherein the detection elements (11-16) includes first to sixth detection elements (11-16), and the first to sixth elements are laid out so that
the first detection element (11) approaches the detection subject (7) as the detection subject (7) moves from the branching toward the first position,
the second detection element (15) approaches the detection subject (7) as the detection subject (7) moves from the branching toward the second position,
the third detection element (16) approaches the detection subject (7) as the detection subject (7) moves from the branching toward the third position,
the fourth detection element (14) and the fifth detection element (13) are separated from the detection subject (7) as the detection subject (7) moves from the branching toward the first position,
the fifth detection element (13) and the sixth detection element (12) are separated from the detection subject (7) as the detection subject (7) moves from the branching toward the second position, and
the fourth detection element (14) and the sixth detection are separated from the detection subject (7) as the detection subject (7) moves from the branching toward the third position.

3. The position sensor according to claim 2, wherein the first to sixth detection elements (11-16) are laid out so that the sixth detection element (12) is closer to the first detection element (11) than the fourth detection element (14) and the fifth detection element (13), the fourth detection element (14) is closer to the second detection element (15) than the fifth detection element (13) and the sixth detection element (12), and the fifth detection element (13) is closer to the third detection element (16) than the fourth detection element (14) and the sixth detection element (12).

## Patentansprüche

1. Positionssensor, der angepasst ist, um eine Position eines Betätigungsbauteils (3) zu erfassen, das entlang einer Betätigungsbahn (4) bewegt wird, die sich in drei unterschiedlichen Richtungen von einer spezifischen Position aus erstreckt, wobei der Positionssensor Folgendes aufweist:
einen einzelnen Erfassungsgegenstand (7), der angepasst ist, um sich in Kooperation mit dem Betätigungsbauteil (3) zwischen der Abzweigungsposition und einer ersten Position, einer zweiten Position und einer dritten Position zu bewegen, die sich in drei Richtungen von einer Abzweigungsposition aus befinden, die der spezifischen Position entspricht; und
Erfassungselemente (11 bis 16), die in der Lage sind, den Erfassungsgegenstand (7) zu erfassen, wobei
jedes von den Erfassungselementen (11 bis 16) angepasst ist, um eine Ausgabe zu erzeugen, die eine Erfassung des Erfassungsgegenstands (7) anzeigt,
die Erfassungselemente (11-16) derart ausgelegt sind, dass eine Bewegung des Erfassungsgegenstands (7) von der Abzweigungsposition aus zu einer von der ersten bis dritten Position die Ausgabe von zumindest zwei von den Erfassungselementen (11-16) von einem Zustand aus ändert, der eine Erfassung des Erfassungsgegenstands (7) anzeigt, zu einem Zustand hin, der eine Nichterfassung des Erfassungsgegenstands (7) anzeigt, die Ausgabe von zumindest einem anderen von den Erfassungselementen (11-16) von einem Zustand aus, der eine Nichterfassung des Erfassungsgegenstands (7) anzeigt, zu einem Zustand hin ändert, der eine Erfassung des Erfassungsgegenstands (7) anzeigt und die Ausgabe eines weiteren von den Erfassungselementen (11-16) unverändert hält,
die Erfassungselemente (11-16) außerdem derart ausgelegt sind, dass eine Bewegung des Erfassungsgegenstands (7) von der Abzweigungsposition aus zu einer von der ersten bis dritten Position die Ausgabe von zumindest dreien von den Erfassungselementen (11-16) ändert,
die zumindest drei von den Erfassungselementen (11 bis 16), von denen die Ausgaben sich ändern, in einer Kombination sind, die sich für jede von der ersten bis dritten Position unterscheidet,
wobei der einzelne Erfassungsgegenstand ein einzelner Magnet ist,
der einzelne Magnet eine Plattenfläche aufweist, die angeordnet ist, um den Erfassungselementen gegenüberzuliegen, und
die Plattenfläche des einzelnen Magneten eine einzige Polarität hat.

2. Positionssensor nach Anspruch 1, wobei die Erfassungselemente (11-16) erste bis sechste Erfassungselemente (11-16) aufweisen und die ersten bis sechsten Elemente derart ausgelegt sind, dass
das erste Erfassungselement (11) sich dem Erfassungsgegenstand (7) annähert, wenn sich der Erfassungsgegenstand (7) von der Abzweigung zu der ersten Position hin bewegt,
das zweite Erfassungselement (17) sich dem Erfassungsgegenstand (7) annähert, wenn sich der Erfassungsgegenstand (7) von der Abzweigung zu der zweiten Position hin bewegt,
das dritte Erfassungselement (16) sich dem Erfassungsgegenstand (7) annähert, wenn sich der Erfassungsgegenstand (7) von der Abzweigung zu der dritten Position hin bewegt,
das vierte Erfassungselement (14) und das fünfte Erfassungselement (13) von dem Erfassungsgegenstand (7) getrennt werden, wenn sich der Erfassungsgegenstand (7) von der Abzweigung zu der ersten Position hin bewegt,
das fünfte Erfassungselement (13) und das sechste Erfassungselement (12) von dem Erfassungsgegenstand (7) getrennt werden, wenn sich der Erfassungsgegenstand (7) von der Abzweigung zu der zweiten Position hin bewegt, und
das vierte Erfassungselement (14) und das sechste Erfassungselement von dem Erfassungsgegenstand (7) getrennt werden, wenn sich der Erfassungsgegenstand (7) von der Abzweigung zu der dritten Position hin bewegt.

3. Positionssensor nach Anspruch 2, wobei das erste bis sechste Erfassungselement (11-16) derart ausgelegt sind, dass das sechste Erfassungselement (12) näher an dem ersten Erfassungselement (11) als das vierte Erfassungselement (14) und das fünfte Erfassungselement (13) ist, das vierte Erfassungselement (14) näher an dem zweiten Erfassungselement (15) als das fünfte Erfassungselement (13) und das sechste Erfassungselement (12) ist, und das fünfte Erfassungselement (13) näher an dem dritten Erfassungselement (16) als das vierte Erfassungselement (14) und das sechste Erfassungselement (12) ist.

## Revendications

1. Capteur de position apte à détecter une position d'un organe de fonctionnement (3) qui se déplace le long d'une voie de fonctionnement (4) s'étendant dans trois directions différentes à partir d'une position spécifique, le capteur de position comprenant :
un sujet de détection unique (7) apte à se déplacer en coopération avec l'organe de fonctionnement (3) entre la position de ramification et une première position, une deuxième position, et une troisième position qui sont situées dans trois directions à partir d'une position de ramification correspondant à la position spécifique ; et
des éléments de détection (11-16) qui sont capables de détecter le sujet de détection (7), dans lequel
chacun des éléments de détection (11-16) est apte à générer une sortie indiquant une détection du sujet de détection (7),
les éléments de détection (11-16) sont disposés de sorte qu'un mouvement du sujet de détection (7) de la position de ramification jusqu'à l'une quelconque des première à troisième positions change les sorties d'au moins deux des éléments de détection (11-16) d'un état indiquant une détection du sujet de détection (7) à un état indiquant une non-détection du sujet de détection (7), change la sortie d'au moins un autre des éléments de détection (11-16) d'un état indiquant une non-détection du sujet de détection (7) à un état indiquant une détection du sujet de détection (7), et maintient inchangée la sortie d'un autre des éléments de détection (11-16),
les éléments de détection (11-16) sont également disposés de sorte qu'un mouvement du sujet de détection (7) de la position de ramification à l'une quelconque des première à troisième positions change les sorties d'au moins trois des éléments de détection (11-16),
les au moins trois des éléments de détection (11-16) dont les sorties changent sont dans une combinaison qui diffère pour chacune des première à troisième positions,
le sujet de détection unique est un aimant unique,
l'aimant unique inclut une surface plate qui est agencée pour s'opposer aux éléments de détection, et
la surface plate de l'aimant unique comporte une polarité unique.

2. Capteur de position selon la revendication 1, dans lequel les éléments de détection (11-16) incluent des premier à sixième éléments de détection (11-16), et les premier à sixième éléments sont disposés de sorte que
le premier élément de détection (11) s'approche du sujet de détection (7) au fur et à mesure que le sujet de détection (7) se déplace de la position de ramification vers la première position,
le deuxième élément de détection (15) s'approche du sujet de détection (7) au fur et à mesure que le sujet de détection (7) se déplace de la position de ramification vers la deuxième position,
le troisième élément de détection (16) s'approche du sujet de détection (7) au fur et à mesure que le sujet de détection (7) se déplace de la position de ramification vers la troisième position,
le quatrième élément de détection (14) et le cinquième élément de détection (13) sont séparés du sujet de détection (7) au fur et à mesure que le sujet de détection (7) se déplace de la position de ramification vers la première position,
le cinquième élément de détection (13) et le sixième élément de détection (12) sont séparés du sujet de détection (7) au fur et à mesure que le sujet de détection (7) se déplace de la position de ramification vers la deuxième position, et
le quatrième élément de détection (14) et le sixième élément de détection (12) sont séparés du sujet de détection (7) au fur et à mesure que le sujet de détection (7) se déplace de la position de ramification vers la troisième position.

3. Capteur de position selon la revendication 2, dans lequel les premier à sixième éléments de détection (11-16) sont disposés de sorte que le sixième élément de détection (12) soit plus près du premier élément de détection (11) que du quatrième élément de détection (14) et du cinquième élément de détection (13), le quatrième élément de détection (14) soit plus près du deuxième élément de détection (15) que du cinquième élément de détection (13) et du sixième élément de détection (12), et le cinquième élément de détection (13) soit plus près du troisième élément de détection (16) que du quatrième élément de détection (14) et du sixième élément de détection (12).
